# EUROPEAN PATENT APPLICATION

(11) **EP 1 752 478 A1**
(43) Date of publication of application: **14.02.2007**
(21) Application number: 05017210.5
(22) Date of filing: 08.08.2005
(51) Int. Cl.: C08F 279/04, C08F 279/02, C08L 51/04, C08L 55/02, C08L 25/08, C08L 25/12

(54) **A process for the production of a graft copolymer having a bimodal particle distribution.**

(71) Applicant: BASF Aktiengesellschaft, 67056 Ludwigshafen (DE)
(72) Inventor: The designation of the inventor has not yet been filed
(74) Representative: Isenbruck, Günter

(57) **Abstract**

A thermoplastic molding composition having reduced gloss sensitivity and no unpleasant odor is produced from a graft copolymer and a thermoplastic polymer. The graft copolymer is produced from a soft elastomeric particulate graft base obtained by emulsion polymerization of a conjugated diene alone or with a small amount of a monoethylenically unsaturated monomer, using an inorganic radical generating substance and a limited amount of chain transfer agent, upon which is grafted a vinyl aromatic monomer and acrylonitrile and optionally another monoethylenically unsaturated monomer using an inorganic radical generating substance while the use of a chain transfer agent is excluded. The thermoplastic polymer is a copolymer of a vinyl aromatic monomer and acrylonitrile and optionally an additional monoethylenically unsaturated monomer. The thermoplastic molding composition has a low level of unpleasant odor coupled with reduced gloss sensitivity and good mechanical properties.

## Description

The invention relates to a process for producing rubber-modified monovinylidene aromatic polymers and molding compositions having improved odor characteristics and reduced gloss sensitivity. Further, the invention relates to rubber-modified monovinylidene aromatic polymers and molding compositions which generate little unpleasant odor during the processing, such as high temperature injection molding, blow molding or extrusion and also having distinctly improved odor characteristics after thermoplastic processing. Yet further, the invention relates to rubber-modified monovinylidene aromatic polymers and molding compositions which exhibit a beneficial combination of physical and aesthetic characteristics, in particular good gloss and reduced gloss sensitivity to molding conditions in combination with an advantageous balance of impact strength and melt flow rate properties.

US 6,323,279 discloses a low individual color thermoplastic molding material which is highly suitable for many applications. However, there is still room for improvement, particularly with respect to reduced gloss sensitivity and improved odor characteristics.

In practical application, rubber-modified monovinylidene aromatic polymer compositions can undergo several kinds of processing (for example, primary processing, such as injection molding and extrusion, and secondary processing, such as thermoforming and blow molding) to form a shaped commercial product. Under the current trends of environmental protection and of making the work place more pleasant for the workers, more attention is being paid to the smell of the work place. It is well known that workers are exposed to the unpleasant smell when the rubber-modified monovinylidene aromatic polymer compositions undergo various kinds of processing. It is therefore an important subject in the art to develop a styrenic resin composition which generates little unpleasant odor during its processing and which enables an operator to bear long-term exposure to the same. Also these intrinsic odors may give rise to problems in certain applications for the mouldings (for example in car interiors).

In US 6297307 it is disclosed that products having distinctly improved odor characteristics after thermoplastic processing may be achieved by adding small quantities of a combination of zinc oxide and/or magnesium oxide and at least one compound containing epoxy groups to the rubber-modified monovinylidene aromatic polymer composition. However addition of extra additives is expensive and will lead to decreased mechanical properties. Reduced gloss sensitivity to molding conditions is not mentioned.

In US 5668207 a rubber-modified monovinylidene aromatic polymer composition generating little unpleasant odor during its processing is obtained by adding a deodorizing agent containing 0.005 to 5.0 wt % of sesquiterpene (C) having a formula of C₁₅H₂₄. However, this is only a cosmetic solution. Undesired odor generating and even hazardous products will still be generated and not be noticed. Reduced gloss sensitivity to molding conditions is not mentioned.

In US 5852124 a rubber-modified monovinylidene aromatic polymer comprising residual styrene monomer and residual 4-vinyl cyclohexene, said residual styrene monomer being present in said composition in an amount below 1500 ppm and said residual 4-vinyl cyclohexene being present in said composition in an amount below 150 ppm is claimed.
According to the examples in this patent however, still substantial amounts of unpleasant odor generating substances will be present. Also reduced gloss sensitivity to molding conditions is not mentioned.

In order to eliminate the unpleasant odor generated during the processing of the styrenic resin, the addition of antioxidants and enhanced devolatilization have been suggested (see, e.g., JP-A 2003/231712, JP-A 2003/040935, TW-A 384253) so as to reduce the content of the residual monomer, thereby reducing the unpleasant odor. However, the improvement achieved thereby is not significant since only one of the many sources of the unpleasant odor is reduced and thus, the improvement in reducing the unpleasant odor is limited.

In an extensive study we found that the unpleasant odor is caused by residual monomers, auxiliaries, impurities and reaction products from applied monomers and auxiliaries. Typical odor generating substances for instance are the decomposition products of organic peroxides (e.g. cumenehydroperoxide) like acetophenone, 2-phenyl propanol-2, bezaldehyde, bezylalcohol, phenol and acetone.

Also there generates unpleasant odor from residual mercaptane which acts as the molecular weight adjusting agent during the polymerization of the rubber modified styrenic resin. Since mercaptans have a pungent, unpleasant odor and due to their low volatility, the unpleasant odor can be easily retained in the resin.

Special attention has to be paid to the addition product of mercaptane and acrylonitrile. The addition product of t-dodecyl mercaptane and acrylonitrile decomposes at about 180°C and generates besides acrylonitrile, typical odor generating substances like mercaptane but also other sulphur containing products like hydrogensulfide.

For obtaining rubber-modified monovinylidene aromatic polymer compositions, which generate little unpleasant odor during processing and having distinctly improved odor characteristics after thermoplastic processing it is essential to exclude the use of organic radical generating substances and the simultaneously use of mercaptane and acrylonitrile during the emulsion polymerization of the impact modifiers.

It is well known in the art that the physical properties of rubber-modified monovinylidene aromatic polymer compositions are greatly affected by the relative amounts of elastomer particles having different sizes and particle structures.

In view of these phenomena observed in the production of rubber-modified monovinylidene aromatic polymer compositions, a great deal of effort has gone into achieving optimized physical properties e.g. combinations of excellent gloss, impact and flow properties, by tailoring the rubber particle distributions in the ABS (rubber modified styrene-acrylonitrile) and ABS-type compositions.

Most common are formulations wherein various "bimodal" particle size distributions are disclosed. As used in the art and herein, a composition having a "bimodal" particle size distribution contains two distinct groups of rubber particles, each group having a different average particle size. See for example US 4,009,226; 4,009,227; 4,224,419; 5,352,728; DE-A 41 10 459; 195 20 286.

More recently, there have been disclosed "trimodal" rubber particle size rubber-reinforced polymer compositions wherein the rubber reinforcing ingredient takes the form of three distinct types of rubber particles. See, for example, DE 196 49 255; 198 53 107 and 100 08 418. However, in all the above documents, odor and gloss sensitivity are not mentioned.

As is well known to those skilled in the rubber-modified polymer art, one practical problem which can be encountered with various rubber-modified polymer compositions when used in actual practice to prepare molded articles is that certain physical and/or aesthetic characteristics of the resulting molded article can be adversely affected by the molding conditions employed. Thus, for example, one common problem which has been observed with conventional, commercially available ABS resins is that - if inadequate molding pressure is employed in the molding operation in question - the gloss of a part molded therefrom can be less than what is actually achievable with a given ABS resin. Such phenomenon is often referred to as gloss sensitivity to molding pressure or molding conditions and the lower molded article gloss (i.e., a lower gloss value than is otherwise achievable under proper or optimum molding conditions) is often referred to as "short shot gloss". Gloss gradient is another name for this phenomenon.

In US 5,041,498 ABS resins are provided which have three different types of rubber particles. One particle type is a small, emulsion-produced particle and another is a large emulsion-produced particle. The third particle type is a large, mass-polymerized graft copolymer particle which comprises as its rubbery substrate a diene polymer ingredient containing at least about 80 weight percent of a polymerized diene monomer and which constitutes no more than about 30 weight percent of the total rubber components contained within the compositions of interest. The resulting compositions have very high gloss characteristics and reduced gloss sensitivity to molding condition variations. Disadvantage is that because three different rubber particles made by at least two different polymerization techniques (emulsion and mass) the production is complicated and commercially unattractive. Odor characteristics during and after thermoplastic processing are not mentioned.

In view of the above facts it is difficult to obtain simultaneously the characteristics of compositions which generate little unpleasant odor during and after thermal processing and a beneficial combination of physical and aesthetic characteristics, in particular good gloss and reduced gloss sensitivity to molding conditions in combination with an advantageous balance of impact strength and melt flow rate properties, so a novel resin composition is therefore provided to attain the above characteristics.

The object of the invention is to provide a graft copolymer which is useful for preparing impact modified thermoplastic molding compositions which generate little unpleasant odor during processing.

A further object of the invention is to provide impact modified thermoplastic molding compositions, in particularly ABS, which generate little unpleasant odor during their processing, and to provide polymer molding compositions which have no unpleasant odors once they have been processed into moldings. A further object is to provide molding compositions with high gloss and low gloss sensitivity without adverse effect on their other advantageous properties, for example mechanical properties, such as toughness, and flow.

It has been found that these objects are achieved by a careful selection of the reagents and reaction conditions in the preparation of the graft copolymer which is used as one component of the thermoplastic molding composition.

Therefore, in one aspect of the invention there is provided a process for producing a graft copolymer A having a bimodal particle size distribution and comprising (based on the total weight of A):
40 to 90% by weight of a graft base (a1) and
10 to 60% by weight of a graft (a2), comprising the steps of
   1. dispersion-polymerizing, based on the total weight of (a1)
      a11) from 70 to 100% by weight of at least one conjugated diene,
         a12) from 0 to 30% by weight of at least one other monoethylenically unsaturated monomer and
         a13) from 0 to 10% by weight of at least one polyfunctional, cross linking monomer,
      in the presence of
      - a free radical initiator, which is not an azo compound or an organic peroxide or a hydroperoxide, and
      - more than 0.5 and less than 1.2% by weight (based on (a1)) of a chain transfer agent containing a mercapto group,
      and
   2. graft copolymerizing in the presence of (a1)
      a21) from 65 to 95% by weight (based on (a2)) of one or more vinyl aromatic monomer,
      a22) from 5 to 35% by weight of acrylonitrile,
      a23) from 0 to 30% by weight of at least one other monoethylenically unsaturated monomer, and
      a24) from 0 to 10% by weight of at least one polyfunctional, cross linking monomer, in the presence of a free radical initiator, which is not an azo compound or an organic peroxide or a hydroperoxide and in the absence of a chain transfer agent.

In another aspect of the invention there is provided a graft copolymer A having a bimodal particle size distribution, obtainable by the process described above.

In a further aspect of the invention there is provided a process for producing a thermoplastic molding composition (TMC), comprising the steps of
I. preparing a particulate graft copolymer A having a bimodal size distribution and comprising (based on the total weight of A):
   40 to 90% by weight of a graft base (a1) and
   10 to 60% by weight of a graft (a2) by

   I.1 dispersion-polymerizing, based on the total weight of (a1)
      a11) from 70 to 100% by weight of at least on conjugated diene,
      a12) from 0 to 30% by weight of at least one other monoethylenically unsaturated monomer and
      a13) from 0 to 10% by weight of at least one polyfunctional, cross linking monomer,
      in the presence of
      - a free radical initiator, which is not an azo compound or an organic peroxide or a hydroperoxide, and
      - more than 0.5 and less than 1.2% by weight (based on (a1)) of a chain transfer agent containing a mercapto group,
   1.2 graft copolymerizing in the presence of (a1)
      a21) from 65 to 95% by weight (based on (a2)) of one or more vinyl aromatic monomer,
      a22) from 5 to 35% by weight of acrylonitrile,
      a23) from 0 to 30% by weight of at least one other monoethylenically unsaturated monomer, and
      a24) from 0 to 10% by weight of at least one polyfunctional, cross linking monomer,
      in the presence of a free radical initiator, which is not an azo compound or an organic peroxide or a hydroperoxide and in the absence of a chain transfer agent; and
II. blending 5 to 100% by weight (based on the total TMC) of the graft copolymer A with
   B) from 20 to 95% by weight (based on the total TMC) of a thermoplastic polymer (B) having a viscosity number VN of from 50 to 120 ml/g, made from, based on (B),
   b1) 69 to 81 % by weight of at least one vinyl aromatic monomer,
   b2) 19 to 31 % by weight of acrylonitrile, and
   b3) 0 to 30% by weight of at least one other monoethylenically unsaturated monomer, and
   optionally further thermoplastic polymers and/or additives.

In a preferred embodiment, the process according to the invention comprises
I. steps I.1 and I.2 as described above;
II.1 mixing the graft copolymer (A) with the polymer (B) and any other components, if they are present, in a mixing apparatus, giving an essentially molten polymer mixture; and
II.2 rapidly cooling of the essentially molten polymer mixture over a period of from 0.1 to 10 sec.

In a further aspect of the invention there is provided a thermoplastic molding composition (TMC) obtainable by the process described above.

In yet a further aspect of the invention there is provided

a thermoplastic molding composition (TMC), comprising
A from 5 to 80% by weight of a graft polymer A) having bimodal particle size distribution made from, based on A),
a1) from 40 to 90% by weight of an elastomeric particulate graft base a1), obtained by dispersion-polymerization of, based on a1),
   a11) from 70 to 100% by weight of at least one conjugated diene,
   a12) from 0 to 30% by weight of at least one other monoethylenically unsaturated monomer and
   a13) from 0 to 10% by weight of at least one polyfunctional, cross linking monomer;
a2) from 10 to 60% by weight of a graft a2) made from, based on a2),
   a21) from 65 to 95% by weight of at least one vinyl aromatic monomer,
   a22) from 5 to 35% by weight of acrylonitrile,
   a23) from 0 to 30% by weight of at least one other monoethylenically unsaturated monomer, and
   a24) from 0 to 10% by weight of at least one polyfunctional, cross linking monomer;
B) from 20 to 95% by weight of a thermoplastic polymer (B) having a viscosity number VN of from 50 to 120 ml/g, made from, based on (B),
b1) from 69 to 81 % by weight of at least one vinyl aromatic monomer,
b2) from 19 to 31 % by weight of acrylonitrile, and
b3) from 0 to 30% by weight of at least one other monoethylenically unsaturated monomer and
optionally one or more further thermoplastic polymers and/or additives, which is obtainable by the process described above, and wherein the amount of residual chain transfer agent is below 20 ppm (based on dodecyl mercaptane).

Preferred are thermoplastic molding compositions, in which the amount of residual chain transfer agent is < 20, more preferred < 15 and most preferred < 10 ppm (based on dodecyl mercaptane) and the amount of residual mercaptopropionitrile (addition product of acrylonitrile and mercaptane) is < 50, more preferred < 30 and most preferred < 20 ppm (based on dodecyl mercaptane).

In further aspects of the invention there are provided a molding produced from a thermoplastic molding composition as described above, and a process for producing a molding, comprising the steps of preparing a thermoplastic molding composition as described above and processing the thermoplastic molding composition into the desired form.

Moldings prepared from the molding compositions obtainable according to the inventive process show improved odor characteristics, low gloss sensitivity, an excellent surface quality and relatively high impact strengths.

In the thermoplastic molding composition according to the invention, component (A) is a graft copolymer having bimodal particle size distribution in a proportion of from 5 to 80% by weight, preferably from 10 to 70% by weight, particularly preferably from 15 to 60% by weight, based on the total of the composition. The graft polymer A) is built up from a "soft" elastomeric, particulate graft base (a1) and a "hard" graft (a2).

The graft base (a1) is present in a proportion of from 40 to 90% by weight, preferably from 45 to 85% by weight, and particularly preferably from 50 to 80% by weight, based on component (A).

The graft base (a1) is obtained by polymerizing, based on (a1),
a11) from 70 to 100% by weight, preferably from 75 to 100% by weight, and particularly preferably from 80 to 100% by weight, of at least one conjugated diene, and
a12) from 0 to 30% by weight, preferably from 0 to 25% by weight, and particularly preferably from 0 to 20% by weight, of at least one other monoethylenically unsaturated monomer.

Examples of conjugated dienes a11) are butadiene, isoprene, chloroprene and mixtures of these. Preference is given to the use of butadiene or isoprene or mixtures of these, butadiene is particularly preferred.

Component (a1) of the molding compositions optionally contains, with corresponding reduction in the monomers (a11), other monomers (a12) which vary the mechanical and thermal properties of the core within a certain range. Examples of such monoethylenically unsaturated comonomers are:
vinyl aromatic monomers, such as styrene and styrene derivatives of the formula (I), 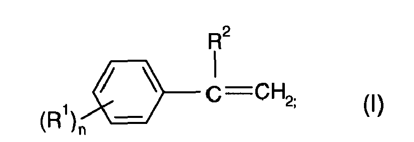 where R¹ and R² are hydrogen or C₁-C₈-alkyl and n is 0, 1, 2 or 3;
C₁-C₁₀-alkylacrylates, such as methyl acrylate, ethyl acrylate, n-propyl acrylate, isopropyl acrylate, n-butyl acrylate, isobutyl acrylate, sec-butyl acrylate, tert-butyl acrylate, ethylhexyl acrylate, and the corresponding C₁-C₁₀-alkyl methacrylates, and hydroxyethyl acrylate;

Preferred monomers (a12) are styrene, α-methyl styrene, n-butyl acrylate or mixtures of these, styrene and n-butyl acrylate or mixtures of these being particularly preferred and styrene being very particularly preferred. Styrene or n-butyl acrylate or mixtures of these are preferably used in amounts of, in total, up to 20% by weight, based on (a1).

In a particularly preferred embodiment, use is made of a graft base made from, based on (a1),
(a11) from 70 to 99.9, preferably from 90 to 99% by weight, of butadiene, and
(a12) from 0.1 to 30, preferably from 1 to 10% by weight, of styrene.

Generally, diene rubbers (a1) exhibit a glass transition temperature Tg of less than 0°C (determined as specified in DIN 53765).

The synthesis of rubbers (a1) is known to the person skilled in the art or may be carried out by methods known to the person skilled in the art. Thus diene rubbers (a1) can be prepared in a first step in which they are not formed in a particulate state, for example by solution polymerization or gas-phase polymerization, and are then dispersed in the aqueous phase in a second step (secondary emulsification).

Heterogeneous, particle-forming polymerization processes (dispersion polymerization) are used for the synthesis of rubbers (a1). Dispersion polymerization is generally carried out in a known manner, preferably by the emulsion, inverse emulsion, mini emulsion, micro emulsion, or micro suspension polymerization method.

Dispersion polymerization can be carried out in an organic solvent or an aqueous phase.

The rubbers (a1) are preferably prepared in aqueous phase. By aqueous phase is meant a solution, emulsion or suspension of the corresponding monomers or polymers in water or in a solvent mixture containing a large proportion, i.e., at least 20% by weight, of water.

In a preferred embodiment, polymerization is carried out by the emulsion method, in which the monomers are polymerized in aqueous emulsion at from 20 to 100°C, preferably at from 50 to 80°C, in which case all components of the batch can be combined (batch process), or the monomer alone or an emulsion of monomer, water and emulsifiers can be gradually added to the other components (feed process). Furthermore, it is possible to carry out the reaction by a continuous method. Preference is given to the feed process.

Suitable emulsifiers are for example alkali metal salts of alkyl- or alkylaryl-sulfonic acids, alkyl sulphates, fatty alcohol sulfonates, salts of higher fatty acids containing from 10 to 30 carbons, sulfosuccinates, ether sulfonates or resin soaps. Preferably, use is made of the alkali metal salts of alkylsulfonates or fatty acids containing from 10 to 18 carbons. Their concentration is generally from 0.5 to 5% by weight, based on (a1) (sum of monomers (a11) and (a12)).

Preferably, the preparation of the dispersion is carried out using sufficient water to give the final dispersion solids content of from 20 to 50% by weight.

Free-radical initiators suitable for starting the polymerization reaction are compounds which decompose at the reaction temperature chosen, i.e. both those which undergo decomposition thermally and those which do so in the presence of a redox system. Suitable polymerization initiators are preferably inorganic peroxides, more preferred peroxidisulfates (in particular sodium, potassium or ammonium peroxidisulfate).

To reduce the formation of odor generating substances the use of azo compounds, such as azodiisobutyronitrile, or redox systems based on organic peroxides and/or hydroperoxides, such as cumene hydroperoxides, is excluded.

Generally, the polymerization initiators are used in a concentration of from 0.1 to 2% by weight, based on monomers (a1).

The free-radical initiators and the emulsifiers are for example placed in the reaction vessel as a single batch at the start of the reaction in batch wise mode, or are divided into a number of portions which are added batch wise at the start and at one or more intervals thereafter, or are added continuously over a specific period. This continuous addition may follow a gradient, which may, for example, be ascending or descending, linear or exponential, or stepped (step function).

Use is made of one or more chain transfer agents (molecular weight regulators) containing a mercapto group, such as alkyl mercaptanes, preferably (C₆-C₂₀)alkyl mercaptanes, such as n-dodecyl mercaptane and t-dodecyl mercaptane, or thioglycolates, such as esters or salts of thioglycolic acid, e.g. 2-ethyl-hexyl thioglycolate.

The use of n- or t-dodecyl mercaptane is particularly preferred.

The molecular weight regulators are added to the reaction batch wise or continuously as described above with reference to the free-radical initiators and emulsifiers.

The amount of the chain transfer agents is > 0.5 and < 1.2, more preferred > 0.6 and < 1.0 and most preferred > 0.7 and < 0.9 % by weight based on monomers (a1).

Polymerization is generally carried out at a pH of preferably from 6 to 10. Buffering agents, such as Na₂HPO₄/NaH₂PO₄, sodium pyrophosphate, sodium hydrogen carbonate or buffers based on citric acid/citrate may also be used. Regulators and buffering agents are used in conventional amounts, which are well known to those skilled in the art.

Inverse emulsion polymerization differs from emulsion polymerization in that instead of hydrophobic monomers dispersed in an aqueous phase, use is made of hydrophilic monomers dispersed in a substantially no aqueous phase.

Miniemulsion polymerization differs from emulsion polymerization primarily in that the mixture of monomers, water, emulsifiers and co-emulsifiers is subjected, in a first step, to high shearing forces and the polymerization reaction is carried out in a second step. This produces very fine monomer droplets. The batch is then polymerized by means of a watersoluble initiator according to the invention, e.g., a persulfate. The particle size distribution of the monomer droplets usually substantially corresponds to the later particle size distribution of the polymer particles. The high shearing forces can be produced for example by ultrasound or a micro fluidizer appliance, or alternatively by homogenizers. Details of the miniemulsion polymerization process may be found by the person skilled in the art in, e.g., P. Lovell, M. El-Aasser, Emulsion Polymerization and Emulsion Polymers, John Wiley, New York, 1997, pp. 699-722.

In micro emulsion polymerization very large amounts of emulsifier are used, thereby distinguishing it from emulsion polymerization. In this way similarly large monomer droplets are produced as in miniemulsion polymerization; but in the case of micro emulsion polymerization the droplets are thermodynamically stable.

In other respects the above statements concerning normal emulsion polymerization apply to both miniemulsion and micro emulsion polymerization.

The monomers (a1) are polymerized conventionally up to a conversion of usually at least 90% and preferably greater than 95%, based on the monomers used.

The reaction conditions are preferably balanced so that the polymer particles have a bimodal particle size distribution, i.e. a particle size distribution having two maxima whose distinctness may vary. The first maximum is more distinct (peak comparatively narrow) than the second and is generally at from 25 to 200 nm, preferably from 60 to 170 nm and particularly preferably from 70 to 150 nm. The second maximum is broader in comparison and is generally at from 150 to 800 nm, preferably from 180 to 700, particularly preferably from 200 to 600 nm. The second maximum here (from 150 to 800 nm) is at larger particle sizes than the first maximum (from 25 to 200 nm).

The particle sizes stated always refer to the d₅₀ value (weight average, determined by analytical ultracentrifuge measurements as described by W. Machtle, S. Harding (Eds.), AUC in Biochemistry and Polymer Science, Cambridge, Royal Society of Chemistry UK 1992 pp. 1447-1475).

The bimodal particle size distribution is preferably achieved by (partial) agglomeration of the polymer particles. This can be achieved, for example, by the following procedure: the monomers (a1), which form the core, are polymerized to a conversion of usually at least 90%, preferably greater than 95%, based on the monomers used. This conversion is generally achieved in from 4 to 20 hours. The resultant rubber latex has a mean particle size d₅₀ of not more than 200 nm and a narrow particle size distribution (virtually monodisperse system).

In a second step, the rubber latex is (partially) agglomerated. This is preferably done by adding a dispersion of an acrylate polymer. Preference is given to the use of dispersions of copolymers of C₁-C₄-alkyl acrylates, preferably of ethyl acrylate, with from 0.1 to 10% by weight of monomers which form polar polymers, examples being acrylic acid, methacrylic acid, acrylamide, methacrylamide, N-methylol methacrylamide and N-vinylpyrrolidone. Particular preference is given to a copolymer of 96% of ethyl acrylate and 4% of methacrylamide. The agglomerating dispersion contains, if desired, more than one of the acrylate polymers mentioned.

The concentration of the agglomerating polymers in the dispersion used for agglomeration is generally in the range from 3 to 60% by weight and preferably from 5 to 40% by weight. The agglomerating dispersion may, if desired, comprise a mixture of, say, two or more different agglomerating polymers.

Agglomeration is usually carried out using from 0.1 to 5 and preferably from 0.5 to 3 parts by weight of the agglomerating dispersion per 100 parts by weight of the rubber, each based on solids.

The agglomeration is preferably carried out at a temperature of from 20 to 120°C and more preferably from 30 to 100°C. The addition of the agglomerating dispersion takes place all at once or in portions, continuously or according to a feed profile over a certain period of time. In a preferred embodiment, the addition of the agglomerating dispersion is carried out in such a manner that 1/1 to 1/100 of the total amount of the agglomerating dispersion is introduced per minute. The agglomerating time is preferably from 1 minute to several hours, for example up to two hours, and more preferred from 10 to 60 minutes.

In another embodiment, the agglomeration is carried out in the presence of basic electrolytes, including organic or inorganic hydroxides. Inorganic hydroxides are especially suitable. Monovalent basic electrolytes are preferred. Particular preference is given to the use of lithium hydroxide, sodium hydroxide or potassium hydroxide.

The pH during agglomeration is generally from 6 to 13.

Besides an acrylate polymer dispersion, use may also be made of other agglomerating agents, such as acetic anhydride, for agglomerating the rubber latex. Agglomeration by pressure or freezing is also possible. The methods mentioned are known to the person skilled in the art.

Under the conditions mentioned, the rubber latex is only partially agglomerated, giving a bimodal distribution. More than 50%, preferably from 75 to 95%, of the particles (distribution by number) are generally in the non-agglomerated state after the agglomeration. The resultant partially agglomerated rubber latex is relatively stable, and it is therefore easy to store and transport it without coagulation occurring.

It is also possible to carry out the partial agglomeration at the stage of the graft copolymer, i.e. after grafting.

In a further embodiment of the process according to the invention, a bimodal particle size distribution of the graft polymer (A) is achieved by preparing, separately from one another in the usual manner, two different graft polymers A') and A"), differing in their mean particle size, and to mix the graft polymers A') and A") in the desired mixing ratio.

In another embodiment, the graft base (a1) is prepared by polymerizing the monomers (a1) in the presence of a finely divided latex (the seed latex method of polymerization). This latex is the initial charge and may be made from monomers which form elastomeric polymers or else from other monomers mentioned above. Suitable seed latices are made from, for example, polybutadiene or polystyrene.

In another preferred embodiment, the graft base (a1) is prepared by the feed method. In this process, the polymerization is initiated using a certain proportion of the monomers (a1), and the remainder of the monomers (a1) (the feed portion) is added as feed during the polymerization. The feed parameters (gradient shape, amount, duration, etc.) depend on the other polymerization conditions. The principles of the descriptions given in connection with the method of addition of the free-radical initiator and/or emulsifier are once again relevant here. In the feed process, the proportion of the monomers (a1) in the initial charge is preferably from 5 to 50% by weight, particularly preferably from 8 to 40% by weight, based on (a1). The feed portion of (a1) is preferably fed in within a period of from 1 to 18 hours, in particular from 2 to 16 hours, very particularly from 4 to 12 hours.

Graft polymers having a number of "soft" and "hard" shells, e.g. of the structure (a1)-(a2)-(a1)-(a2) or (a2)-(a1)-(a2), are also suitable, especially where the particles are of relatively large size.

The precise polymerization conditions, in particular the type, amount and method of addition of the emulsifier and of the other polymerization auxiliaries are preferably selected so that the resultant latex of the graft polymer (A) has a mean particle size, defined by the D₁ of the particle size distribution, of from 80 to 800, preferably from 80 to 600 and particularly preferably from 85 to 400.

The difference in mean particle size between the two different fractions of component (A) is generally of from 70 to 700, preferably of from 150 to 500 nm.

The polymerization of the graft base (a1) is usually carried out with reaction conditions selected to give a graft base having a particular cross linked nature. Examples of relevant parameters are the reaction temperature and duration, the ratio of monomers, regulator, free-radical initiator and, for example in the feed process, the feed rate and the amount and timing of addition of regulator and initiator.

One method for describing the cross linked nature of cross linked polymer particles is measurement of the swelling index QI, which is a measure of the solvent-swellability of a polymer having some degree of cross linking. Examples of customary swelling agents are methyl ethyl ketone and toluene. The Ql of the graft bases (a1) is usually in the range Ql=from 10 to 60, preferably from 15 to 50 and particularly preferably from 20 to 40.

Another method for describing the extent of cross linking is the measurement of T₂ times, the NMR relaxation times of protons capable of movement. The more strongly cross linked a particular network is, the lower its T₂ times are. Customary T₂ times for the graft bases (a1) are in the range from 2.0 to 4.5 ms, preferably from 2.5 to 4.0 ms and particularly preferably from 2.5 to 3.8 ms, measured at 80°C on specimens in film form.

Gel content is another criterion for describing the graft base and its extent of cross linking, and is the proportion of material which is cross linked and therefore insoluble in a particular solvent. It is useful to determine the gel content in the solvent also used for determining the swelling index. Gel contents of the graft bases (a1) according to the invention are usually in the range from 50 to 95%, preferably from 60 to 90% and particularly preferably from 70 to 85%.

The following method may, for example, be used to determine the swelling index: about 0.2 g of the solid from a graft base dispersion converted to a film by evaporating the water is swollen in a sufficient quantity (e.g. 50 g) of toluene. After, for example, 24 h, the toluene is removed with suction and the specimen is weighed. The weighing is repeated after the specimen has been dried in vacuo. The swelling index is the ratio of the specimen weight after the swelling procedure to the dry specimen weight after the second drying. The gel content is calculated correspondingly from the ratio of the dry weight after the swelling step to the weight of the specimen before the swelling step (x 100%).

The T₂ time is determined by measuring the NMR relaxation of a specimen of the graft base dispersion from which water has been removed and which has been converted into a film. For this, the specimen is, for example, dried in air overnight, at 60°C for 3 h in vacuo and then studied at 80°C using a suitable measuring apparatus, e.g. Bruker minispec (Bruker, USA). For a comparison, specimens should be studied by the same method, since the relaxation is markedly temperature-dependent.

The graft (a2) is present in (A) in a proportion of from 10 to 60% by weight, preferably from 15 to 55% by weight, and particularly preferably from 20 to 50% by weight, based on the total weight of (A).

The graft (a2) is obtained by graft copolymerizing in the presence of (a1),
a21) from 65 to 95% by weight (based on (a2)), preferably from 70 to 90% by weight, and particularly preferably from 75 to 85% by weight, of at least one vinyl aromatic monomer,
a22) from 5 to 35% by weight, preferably from 10 to 30% by weight, and particularly preferably from 15 to 25% by weight of acrylonitrile,
a23) from 0 to 30% by weight, preferably from 0 to 20% by weight, and particularly preferably to 0 to 15% by weight, of at least one further monoethylenically unsaturated monomer.

Examples of vinyl aromatic monomers are styrene and styrene derivatives of the formula (I), 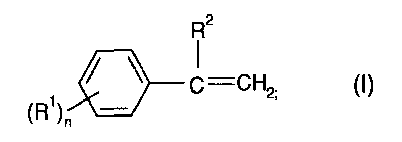 where R¹ and R² are hydrogen or C₁-C₈-alkyl and n is 0, 1, 2 or 3. Preference is given to the use of styrene (R² = H and n = 0).

Examples of other monomers (a23) are the monomers listed above for component (a12). Methyl methacrylate and acrylates, such as n-butyl acrylate, are particularly suitable. Methyl methacrylate (MMA) is very particularly suitable as monomer (a23), an amount of up to 20% by weight of MMA, based on (a2), being preferred.

The graft copolymerization is preferably carried out in emulsion in the presence of the agglomerated rubber (a1). The process is generally carried out at from 20 to 100°C, preferably from 50 to 80°C. Additional use is generally made of customary emulsifiers, for example alkali metal salts of alkyl- or alkylarylsulfonic acids, alkyl sulphates, fatty alcohol sulfonates, salts of higher fatty acids having from 10 to 30 carbon atoms, sulfosuccinates, ether sulfonates or resin soaps. It is preferable to use the alkali metal salts, in particular the Na and K salts, of alkylsulfonates or fatty acids having from 10 to 18 carbon atoms.

The emulsifiers are generally used in amounts of from 0.5 to 5% by weight, in particular from 0.5 to 3% by weight, based on the monomers used in preparing the graft base (a1).

In preparing the dispersion, it is preferable to use sufficient water to give the finished dispersion a solids content of from 20 to 50% by weight. A water/monomer ratio of from 2:1 to 0.7:1 is generally used.

Suitable free-radical initiators for starting the polymerization are those listed above for the preparation of (a1).

The free-radical initiators are generally used in amounts of from 0.1 to 1% by weight, based on the graft base monomers (a11) and (a12).

The free-radical initiators and also the emulsifiers are added to the reaction mixture, for example, batchwise as a total amount at the beginning of the reaction or in stages, divided into a number of portions, at the beginning and at one or more later times, or continuously over a defined period. Continuous addition may also follow a gradient, which may, for example, rise or fall and be linear or exponential or even a step function.

To avoid the formation of substances resulting in an unpleasant odor, such as mercapto-propionitriles, the use of chain transfer agents containing a mercapto group during the graft polymerization step is excluded.

The graft (a2) may be prepared under the same conditions as those used for preparation of the graft base (a1) and may be prepared in one or more process steps.

In two-stage grafting, for example, it is possible to polymerize styrene and/or α-methyl styrene alone, and then styrene and acrylonitrile, in two sequential steps. Further details concerning the preparation of the graft polymers (a2) are given in DE-OS 12 60 135 and 31 49 358.

It is advantageous in turn to carry out the graft polymerization onto the graft base (a1) in aqueous emulsion. It may be undertaken in the same system used for polymerizing the graft base, and further emulsifier and initiator may be added. These need not be identical with the emulsifiers and/or initiators used for preparing the graft base (a1). However, to reduce the formation of odor generating substances, free radical initiators which are azo compounds, or organic peroxides, or hydroperoxides are excluded. Such excluded initiators are, for example, oil-soluble initiators or initiators that are soluble in the monomer, examples being dialkyl peroxides, such as dilauryl peroxide and dibenzyl peroxide, per esters, such as tert-butyl perpivalate and tert-butyl peroxyneodecanoate, further diperoxyketals, peroxycarbonates and azo compounds, such as azodiisobutyronitrile (azobisisobutyronitrile, AIBN) and azo-diisovaleronitrile (ADVN), furthermore, hydroperoxides, particularly redox systems based on hydroperoxides, such as cumene hydroperoxides.

Preferred free radical initiators in the graft copolymerization are the ones used in the preparation of (a1).

The monomer mixture to be grafted on may be added to the reaction mixture all at once, in portions in more than one step-or, preferably, continuously during the polymerization. The monomers (a21), (a22) and (a23) are added individually or intermixed. The ratio of the monomers in the mixture is constant in time or follow a gradient. Alternatively, combinations of these methods are used.

If non-grafted polymers are produced from the monomers (a2) during the grafting of the graft base (a1), the amounts, which are generally less than 10% by weight of (a2), are attributed to the weight of component (A).

Details on how to carry out the grafting reaction in emulsion may be found, for example, in DE-A 24 27 960 and EP-A 0 062 901.

Graft copolymers (A) are, in step II of the process according to the invention, blended with one or more matrix polymers (B) and optionally other components. These are described below.

In a preferred embodiment, the graft copolymer (A) is directly blended with component B without further work up. Of course it is also possible to isolate (A) and blend at a later stage.

Component B) is a thermoplastic polymer and is present in the molding compositions according to the invention in a proportion of from 20 to 95% by weight, preferably from 30 to 90% by weight and particularly preferably from 40 to 85% by weight, based on the total of components (A) and (B), and, if present, further components.

Component (B) is obtained by polymerizing, based on (B),
b1) from 69 to 81% by weight, preferably from 70 to 78% by weight and particularly preferably from 70 to 77% by weight, of at least one vinyl aromatic monomer,
b2) from 19 to 31% by weight, preferably from 22 to 30% by weight and particularly preferably from 23 to 30% by weight, of acrylonitrile,
b3) from 0 to 30% by weight, preferably from 0 to 28% by weight, of at least one other monoethylenically unsaturated monomer.

Suitable vinyl aromatic monomers (b1) are styrene and styrene derivatives of the formula (I) as described for component (a21). Preference is given to the use of styrene and/or α-methyl styrene.

In a further preferred embodiment, component (B) consists of two polymers (B') and (B"). The polymer (B') here corresponds to the polymer (B) described above, where the vinyl aromatic monomers (b1') are only those of the formula (I) which have R¹ and R² as hydrogen, i.e. non-alkylated vinyl aromatics. Styrene is preferred as monomer (b1') in (B') (R² = H, n = 0).

The polymer (B") corresponds to the polymer (B) described above, where the vinyl aromatic polymers (b1") are only those of the formula (I) which have R¹ and R² as C₁-C₈-alkyl, i.e. alkylated vinyl aromatics. α-Methyl styrene is preferred as monomer (b1") in (B").

Polymer (B") is preferably an α-methyl styrene-acrylonitrile copolymer. If component (B) consists of two components (B') and (B"), it particularly preferably consists of a styrene-acrylonitrile copolymer (B') and an α-methyl styrene-acrylonitrile polymer (B").

If (B) consists of (B') and (B"), the ratio (B')/(B") is preferably from 99:1 to 1:99, preferably from 95:5 to 5:95.

Other possible monomers (b3) include the monomers mentioned earlier for component (a12). Particularly suitable monomers are methyl methacrylate and N-alkyl- and/or N-arylmaleimides, such as N-phenylmaleimide.

The polymers (B), which due to their main components styrene and acrylonitrile are generally also referred to as SAN (styrol-acryl nitrile) polymers, are known and in some cases also commercially available.

Component (B) has a viscosity number VN of from 50 to 120 ml/g, preferably from 52 to 110 ml/g and particularly preferably from 55 to 105 ml/g.

All viscosity numbers mentioned in this application are determined according to DIN 53 726 at 25°C on a 0.5% strength by weight solution of the respective material in dimethyl formamide.

It is obtained in a known manner by bulk, solution, suspension, precipitation or emulsion polymerization, bulk and solution polymerization being preferred. Details of these processes are described, for example, in Kunststoffhandbuch, ed. R. Vieweg and G. Daumiller, Vol. V "Polystyrol", Carl-Hanser-Verlag Munich, 1969, p. 118 ff.

In a preferred embodiment, the graft (a2) of the graft polymer (A) consists essentially of, based on (a2),
a21) from 75 to 85% by weight of styrene and/or α-methyl styrene
a22) from 15 to 25% by weight of acrylonitrile,
and the thermoplastic polymer (B) consists essentially of, based on (B),
b1) from 71 to 78% by weight of styrene, and
b2) from 22 to 29% by weight of acrylonitrile.

In a preferred embodiment of the invention, the thermoplastic molding composition comprises components A and B and optionally further components (C) to (F):
C) from 0 to 50% by weight of a thermoplastic polymer (C) having a viscosity number VN of from 50 to 120 ml/g made from, based on (C),
c1) from 69 to 81 % by weight of at least one vinyl aromatic monomer,
c2) from 19 to 31 % by weight of acrylonitrile and
c3) from 0 to 30% by weight of at least one other monoethylenically unsaturated monomer,
   where components (B) and (C) differ in their viscosity numbers VN by at least 5 units (ml/g), or in their acrylonitrile content by at least 5 units (% by weight), or in both characteristics, viscosity number VN and acrylonitrile content, by at least 5 units and
D) from 0 to 70% by weight of a thermoplastic polymer (D) made from, based on (D),
d1) from 63 to less than 69% by weight of at least one vinyl aromatic monomer,
d2) from greater than 31 to 37% by weight of acrylonitrile and
d3) from 0 to 40% by weight of at least one other monoethylenically unsaturated monomer and
E) from 0 to 50% by weight of a thermoplastic polymer (E) made from, based on (E),
e1) from 4 to 96% by weight of at least one vinyl aromatic monomer,
e2) from 4 to 96% by weight of at least one monomer selected from the group consisting of methyl methacrylate, maleic anhydride and maleimides and
e3) from 0 to 50% by weight of acrylonitrile, where the polymer E) is different from the polymers B) and from C) and D) if they are present and
F) from 0 to 50% by weight of additives (F).

Component (C) is likewise a thermoplastic polymer and is present in the molding compositions according to the invention in a proportion of from 0 to 50% by weight, preferably from 0 to 48% by weight and particularly preferably from 0 to 45% by weight, based on the total of components (A) and (B), and, if present, (C), (D), (E) and (F).

Component C) is obtained by polymerizing, based on (C),
c1) from 69 to 81% by weight, preferably from 71 to 78% by weight and particularly preferably from 72 to 77% by weight, of at least one vinyl aromatic monomer,
c2) from 19 to 31% by weight, preferably from 22 to 29% by weight and particularly preferably from 23 to 28% by weight, of acrylonitrile, and
c3) from 0 to 40% by weight, preferably from 0 to 30% by weight, of at least one other monoethylenically unsaturated monomer.

Suitable vinyl aromatic monomers (c1) are styrene and styrene derivatives of the formula (I), as described for component (a21). The use of styrene is preferred. The other monomers (c3) may be the monomers mentioned earlier for components (a12). Particularly suitable monomers are methyl methacrylate, maleic anhydride and N-phenylmaleimide.

Component (C) has a viscosity number VN of from 50 to 120 ml/g, preferably from 52 to 110 ml/g and particularly preferably from 55 to 105 ml/g. It is generally obtained in a known manner by bulk, solution, suspension, precipitation or emulsion polymerization, bulk and solution polymerization being preferred. Details of these processes are given, for example, in Kunststoffhandbuch, ed. R. Vieweg and G. Daumiller, Vol. V "Polystyrol", Carl-Hanser-Verlag Munich, 1969, p. 118 ff.

Components (B) and (C) are polymers of the SAN type incorporating comparatively little acrylonitrile (not more than 31 % by weight). According to the invention, the difference between (B) and (C) is
either that the viscosity numbers VN of (B) and (C) differ by at least 5 units [ml/g] (in this case, the mean molar masses M of (B) and (C) are different from one another),
or that the acrylonitrile contents of (B) and (C) (monomers (b2) and (c2), respectively) differ by at least 5 units [% by weight],
or that both characteristics mentioned above, viscosity number VN and acrylonitrile content, differ by at least 5 units.

Component (D) is also a thermoplastic polymer and is present in the novel molding compositions in a proportion from 0 to 95% by weight, preferably from 0 to 80% by weight and in particular from 0 to 70% by weight, based on the total of components (A) and (B), and (C), (D), (E) and (F) if they are present. Component (D) is obtained by polymerizing, based on (D),
d1) from 63 to less than 69% by weight, preferably from 64 to 68% by weight, of at least one vinyl aromatic monomer,
d2) from 31 to 37% by weight, preferably from 32 to 36% by weight, of acrylonitrile,
d3) from 0 to 40% by weight, preferably from 0 to 30% by weight, of at least one other monoethylenically unsaturated monomer.

Suitable vinyl aromatic monomers (d1) are styrene and styrene derivatives of the formula (I), as described for component (a21). Preference is given to the use of styrene and/or .alpha.-methyl styrene, particularly styrene. The other monomer (d3) may be the monomers mentioned earlier for component (a21). Particularly suitable monomers are methyl methacrylate, maleic anhydride, N-phenylmaleimide and other N-substituted maleimides.

Thus, component (D), like components (B) and (C), is an SAN polymer, but differs from (B) and (C) by a low content of vinyl aromatic monomers (d1) and a higher content of acrylonitrile (d2) (more than 31 % by weight).

Component (D) generally has a viscosity number VN of from 55 to 110 ml/g, preferably from 56 to 105 ml/g and particularly preferably from 58 to 103 ml/g. Component (D) is generally obtained in a known manner by bulk, solution, suspension, precipitation or emulsion polymerization. Details of these processes are described, for example, in Kunststoffhandbuch, ed. R. Vieweg and G. Daumiller, Vol. V "Polystyrol", Carl-Hanser-Verlag Munich 1969, p. 118 ff.

Component (E) is also a thermoplastic polymer and is present in the molding compositions according to the invention in a proportion of from 0 to 50% by weight, preferably from 0 to 40% by weight and particularly preferably from 0 to 30% by weight, based on the total of components (A) and (B), and (C), (D), (E) and (F) if they are present. Component (E) is obtained by polymerizing, based on E),
e1) from 4 to 96% by weight, preferably from 8 to 92% by weight and particularly preferably from 10 to 90% by weight, of at least one vinyl aromatic monomer,
e2) from 4 to 96% by weight, preferably from 8 to 92% by weight and particularly preferably from 10 to 90% by weight, of at least one monomer selected from the class consisting of maleic anhydride, maleimides, C₁-C₂₀-alkyl acrylates and C₁-C₂₀-alkyl methacrylates,
e3) from 0 to 50% by weight, preferably from 0 to 40% by weight and particularly preferably from 0 to 30% by weight of acrylonitrile.

Suitable vinyl aromatic monomers (e1) are styrene and styrene derivatives of the formula (I), as described for (a21). Preference is given to the use of styrene and/or α-methyl styrene. Among the C₁-C₂₀-alkyl methacrylates (one of the monomers (e2)), preference is given to methyl methacrylate (MMA). Particularly preferable components (E) are copolymers of styrene and maleic anhydride or of styrene and maleimides, or of styrene, maleimides and MMA or of styrene, maleimides and acrylonitrile, or of styrene, maleimides, MMA and acrylonitrile.

According to the invention, the monomers (e1) to (e3) are selected so that the polymer (E) differs from the polymers (B) and, if they are also present in the molding compositions, (C) and (D). The polymers (E) can serve to increase the heat resistance of the thermoplastic molding compositions.

Component (E) generally has a viscosity number VN of from 50 to 120 ml/g, preferably from 55 to 110 ml/g. Component (E) is generally obtained in a known manner by bulk, solution, suspension, precipitation or emulsion polymerization. Details of these processes are described, for example, in Kunststoffhandbuch, ed. R. Vieweg and G. Daumiller, Vol. V "Polystyrol", Carl-Hanser-Verlag Munich, 1969, p. 118 ff.

Component (F) consists of additives which are present in the novel thermoplastic molding compositions in a proportion of from 0 to 50% by weight, preferably from 0.1 to 45% by weight and particularly preferably from 0.2 to 30% by weight, based on the total of components (A) and (B), and (C), (D), (E) and (F) if they are present.

Component (F) includes lubricants or mold-release agents, waxes, pigments, dyes, flame retardants, antioxidants, stabilizers to counter the action of light, fibrous and pulverulent fillers, fibrous and pulverulent reinforcing agents, antistats and other additives, or mixtures of these.

Representative examples of the lubricants include metal soaps, such as calcium stearate, magnesium stearate, zinc stearate, and lithium stearate, ethylene-bis-stearamide, methylene-bis-stearamide, palmityl amide, butyl stearate, palmityl stearate, polyglycerol tristearate, n-docosanoic acid, stearic acid, polyethylene- polypropylene wax, octacosanoic acid wax, Carnauba wax, montan waxes and petroleum wax. The amount of the lubricants is generally 0.03 to 5.0 wt %, based on the total amount of the thermoplastic molding composition.

Examples of pigments are titanium dioxide, phthalocyanines, ultramarine blue, iron oxides and carbon black, and the entire class of organic pigments.

For the purposes of the invention, dyes are all dyes which can be used for the transparent, semitransparent or non-transparent coloration of polymers, in particular those which are suitable for coloration of styrene copolymers. Dyes of this type are known to the person skilled in the art.

Representative examples of the flame retardant or its synergistic additives include decabromo-diphenyl ether, tetrabromo-bisphenol A, brominated-polystyrene oligomer, bromoepoxy resin, hexabromocyclododecane, chloropolyethylene, triphenyl phosphate, red phosphorous, antimony oxide, aluminium hydroxide, magnesium hydroxide, zinc borate, melamine-isocyanate, phenol resin, silicone resin, polytetrafluoroethylene and expanding graphite.

Particularly suitable antioxidants are sterically hindered mono- or polynuclear phenolic anti-oxidants, which may be substituted in various ways and also bridged via substituents. These include not only monomeric but also oligomeric compounds, which may be built up from more than one fundamental phenol unit. Hydroquinones and substituted compounds which are hydroquinone analogs are also suitable, as are antioxidants based on tocopherols and their derivatives. Mixtures of different antioxidants may also be used. Examples of the anti-oxidants are phenolic antioxidants, thio-ether anti-oxidants, phosphorous-based antioxidants and chelating agents. The phenolic antioxidants are preferably added in an amount of 0.005 to 2.0 wt %. Representative examples of the phenolic antioxidants include octadecyl (3,5-di-tert-butyl-4-hyroxyphenyl) propionate, tri-ethylene glycol-bis(3-(3-tert-butyl-5-methyl-4-hydroxyphenyl)propionate), pentaerythritol-tetrakis-(3-(3,5-di-tert-butyl-4-hydroxyphenyl) propionate), 2-tert-butyl-6-(3-tert-butyl-2-hydroxy-6-methylbenzyl)-4-methy phenyl acrylate, 2,2'-methylene-bis-(4-methyl-6-tert-butyl phenol), butylated reaction product of p-cresol and dicyclopentadiene, 2,2'-thio-bis-(4-methyl-6-tert-butyl phenol), 2,2'-thio-diethylene-bis(3(3,5-di-tert-butyl-4-hydroxy-phenyl) propionate), and 2,2'-ethylene diamide-bis(ethyl-3-(3,5-di-tert-butyl-4-hydroxy-phenyl) propionate).

In principle, it is possible to use any compound which is commercially available or suitable for styrene copolymers, such as Topanol® (Rutherford Chemicals, Bayonne, NJ, USA), Irganox® (Ciba Specialty Chemicals, Basel, Switzerland) or Wingstay® (Eliokem, Villejust, France).

Alongside the phenolic antioxidants mentioned as examples above, it is possible to use co stabilizers, in particular phosphorus- or sulphur-containing co stabilizers.

The thio-ether antioxidants are preferably added in an amount of 0.005 to 2.0 wt %. The phosphorous-based antioxidants include phosphite, phosphate, phosphonite and phosphonate antioxidants. The phosphorous-based antioxidants are preferably added in an amount of 0.015 to 2.0 wt %. Representative examples of the phosphorous antioxidants are tris(nonylphenyl) phosphite, tris(2,4-di-t-butylphenyl)phosphite, triisodecyl phosphite, distearyl pentaerithritol di-phosphite, triphenyl phosphite, diphenyl isodecyl phosphite, tris(isotridecyl) phosphite, tetraphenyl dipropylene glycol, diphosphite, distearyl hydrogen phosphite, diphenyl phenyl phosphonate, tetrakis (2,4-di-tert-butyl phenyl)4,4'-biphenylene di phosphonite.

Representative examples of the thio-ether antioxidants include distearyl thio-dipropionate, dipalmityl thio-dipropionate, dilauryl thio-dipropionate, pentaerythritol-tetrakis-(β-dodecylmethyl-thiopropionate) and dioctadecyl thioether.

Such phosphorus- or sulphur-containing co stabilizers are known to the person skilled in the art and are commercially available.

Representative examples of the heat stabilizer include dibutyl tin maleate and basic magnesium aluminium hydroxy carbonate. A low molecular styrene-maleic anhydride copolymer can also serve as a heat stabilizer to prevent thermal discoloring. The amount of the heat stabilizer is in generally 0.1 to 1.0 wt %, based on the total amount of the rubber modified styrenic resin composition.

Examples of suitable stabilizers to counter the action of light are various substituted resorcinols, salicylates, benzotriazoles, benzophenones and HALS (hindered amine light stabilizers), commercially available, for example, as Tinuvin® (Ciba Specialty Chemicals, Basel, Switzerland). The amount of the preceding additives is generally 0.02 to 2.0 wt % based on the total amount of the rubber-modified styrenic resin composition.

Examples of fibrous and/or particulate fillers are carbon fibers or glass fibers in the form of glass fabrics, glass mats or glass fiber rovings, chopped glass or glass beads, and wollastonite, particularly preferably glass fibers. If glass fibers are used, these may be provided with a size and a coupling agent for better compatibility with the blend components. The glass fibers may be incorporated either in the form of short glass fibers or in the form of continuous strands (rovings).

Suitable particulate fillers are carbon black, amorphous silicic acid, magnesium carbonate, chalk, powdered quartz, mica, bentonites, talc, feldspar or in particular calcium silicates, such as wollastonite, and kaolin.

Chelating agents can preferably be added in an amount of 0.001 to 2.0 wt %. Representative examples of the chelating agent include 2,2'-oxamido-bis-(ethyl 3-(3,5-di-tert-butyl-4-hydroxyphenyl)propionate), the sodium salt of ethylene diamine tetra acetic acid, amino tri(methylene phosphonic acid), 1-hydroxy ethylidene(1,1-diphosphonic acid), ethylene diamine tetra(methylene phosphonic acid), hexamethylene diamine tetra(methylene phosphonic acid) and diethylene triamine penta(methylene phosphonic acid).

A processing aid, such as methyl methacrylate-based copolymer, may be added to improve the extrusion and thermoforming. In addition, silicone oils, oligomeric isobutylene or similar materials are suitable for use as additives. If used, the usual concentrations thereof are from 0.001 to 5% by weight.

Further preferred embodiments of the process according to the invention are as follows:

The graft polymers having bimodal particle size distribution are preferably prepared by emulsion polymerization, as described above for component (A). As described above, suitable measures are taken in order to establish the bimodal particle size distribution, preference being given to (partially) agglomerating the polymer particles, as mentioned, by adding a polyacrylate dispersion which has agglomerating effect. Instead of this, or combined with the (partial) agglomeration, it is possible to use other suitable measures familiar to the person skilled in the art to establish the bimodal particle size distribution, such as mixing two components (A') and (A") which each have a different mean particle size.

The resultant dispersion of the graft polymer (A) may either be mixed directly with the components (B) to (F) or worked up prior to this. The latter procedure is preferred.

The dispersion of the graft polymer (A) is worked up in a manner known per se. The graft polymer (A) is generally firstly precipitated from the dispersion, for example by adding acids (such as acetic acid, hydrochloric acid or sulphuric acid) or salt solutions (such as calcium chloride, magnesium sulphate or alum) which can bring about precipitation, or else by freezing (freeze coagulation). The aqueous phase may be removed in a usual manner, for example screening, filtering, decanting or centrifuging. This preliminary removal of the dispersion water gives graft polymers (A) which are moist with water and have a residual water content of up to 60% by weight, based on (A), where the residual water may, for example, either adhere externally to the graft polymer or else be enclosed within it.

In a following step, the graft polymer may, if required, be dried in a known manner, for example by hot air or using a pneumatic dryer. It is likewise possible to work up the dispersion by spray drying.

If one or more components are incorporated in the form of an aqueous dispersion or of an aqueous or non-aqueous solution, the water or the solvent is removed from the mixing apparatus, preferably an extruder, with the help of a devolatilizing unit.

Examples of mixing apparatuses are discontinuously operating heated internal mixers with or without rams, continuously operating kneaders, such as continuous internal mixers, screw compounders having axially oscillating screws, Banbury mixers, and also extruders, roll mills, mixing rolls where the rolls are heated and calenders.

Preference is given to using an extruder as mixing apparatus. Single- or twin-screw extruders, for example, are particularly suitable for extruding the melt. A twin-screw extruder is preferred.

Mixing of graft polymers (A with the other constituents to produce thermoplastic molding compositions according to the invention) may be carried out by any known method and in any desired manner. However, blending of the components is preferably carried out by co extruding, kneading or roll-milling the components at temperatures of, say, from 180 to 400°C.

The thermoplastic molding compositions can be processed to shaped articles, films or fibers.

According to one embodiment of the invention, these can be prepared from the thermoplastic molding compositions, by known methods of processing thermoplastics. In particular, production may be effected by thermoforming, extruding, injection molding, calendaring, blow molding, pressing, pressure sintering, deep drawing or sintering, preferably by injection molding.

The molded articles prepared from the thermoplastic molding compositions, are characterized by relatively high impact strengths. In addition, they have improved surface quality, low gloss sensitivity and improved odor characteristics.

The invention is illustrated by the following examples, without limiting it thereby.

### EXAMPLES

### 1. Preparation of the Graft Polymer (A)

### 1.1. Preparation of the Graft Base (a1)

Emulsion polymerizations were carried out in a 150 litre reactor at a constant temperature of 67 °C. 43120 g of the monomer mixture given in Table 1 were polymerized at 67 °C in the presence of variable amounts of t-dodecyl mercaptane (TDM), 311 g of the potassium salt of C.sub.12 -C.sub.20 fatty acids, 82 g of potassium persulfate, 147 g of sodium hydrogen carbonate and 58400 g of water, to give a polybutadiene latex. First styrene, which corresponds to the amount listed in table 1, was added in 20 minutes. After the styrene addition, the first part of the butadiene, which corresponds to 10 w% of the total amount of monomer in the recipe, was added in 25 minutes. The remaining part of the butadiene, was added in 8,5 hours. The TDM being added in one portion at the start of the reaction, unless otherwise stated. The conversion was 95% or greater.

**TABLE 1**

| Graft base | | | | |
|---|---|---|---|---|
| Example | K1 | K2 | K3 | K4 |
| Monomers [% by weight] | | | | |
| Butadiene | 90 | 93 | 93 | 100 |
| Styrene | 10 | 7 | 7 | 0 |
| TDM [% by weight]] | 0,5 | 0,8 | 1,0 | 1,2 |

| Properties: | | | | |
|---|---|---|---|---|
| D50 (nm) | 105 | 110 | 90 | 100 |
| Swelling index | 13 | 28 | 23 | 42 |
| Gel content [%] | 90 | 80 | 85 | 66 |

To agglomerate the latex, 5265 g of the resultant latex, diluted to a TSC of 40%, is agglomerated (partial agglomeration) at 68°C by adding 526.5 g of a dispersion (solids content 10% by weight) of 96% by weight of ethyl acrylate and 4% by weight of methacrylamide.

### 1.2. Preparation of the Graft (a2) with peroxidisulfate (examples 1, 2, comparative examples 1, 2, 4)

Following agglomeration, 20 g emulsifier (potassiumstearate) and 3 g initiator (potassium peroxidisulfate) were added. Water was added in an amount to set the total solid content of the dispersion after completion of the polymerisation on a theoretical value of 40%. 74.7 g of acrylonitrile, 298.8 g of styrene were then added. A mixture of 224.1 g of acrylonitrile and 896.4 g of styrene was then added over a period of 190 minutes, the temperature being raised to 77°C after over half of the time. On completion of the addition of monomer, 3 g initiator (potassium persulfate) was again added and the polymerization was continued for 60 minutes.

The resultant graft polymer dispersion, which had a bimodal particle size distribution, had a mean particle size d₅₀ of from 150 to 350 nm and a d₉₀ of from 400 to 600 nm. The particle size distribution had a first maximum in the range from 50 to 150 nm and a second maximum in the range from 200 to 600 nm.

To the dispersion there were added 0.2% by weight of a stabilizer, based, in each case, on the total solids content, and the mixture was cooled and coagulated at ca. 60°C in an aqueous 0,5% MgSO₄-solution followed by an aging step for 10 minutes at 100°C. Afterwards the slurry was cooled down, centrifuged and washed with water to obtain a graft polymer (a2) with a moisture content of about 30%.

### 1.3. Preparation of the Graft (a2) with hydroperoxide/redox system (comparative example 3)

To agglomerate the latex, 5265 g of the resultant latex, diluted to a TSC of 40%, were agglomerated (partial agglomeration) at 55°C by adding 526.5 g of a dispersion (solids content 10% by weight) of 96% by weight of ethyl acrylate and 4% by weight of methacrylamide.

Following agglomeration, 20 g emulsifier (potassiumstearate) was added. Water was added in an amount to set the total solid content of the dispersion after completion of the polymerisation on a theoretical value of 40%. 74.7 g of acrylonitrile, 298.8 g of styrene and 3,74 g t-dodecyl mercaptane was then added and the temperature was raised to 58°C. Then a solution of sodium pyrophosphonic acid, dextrose and ferro sulphate in water is added. As the temperature reached 60°C, 3.1 gr. cumene hydroperoxide was added to initiate the polymerization. The temperature was raised within 60 minutes to 72°C. Then the remaining amount of monomers 224.1 g acrylonitrile, 896.4 g styrene, 11.21 g t-dodecyl mercaptane and 2.7 g cumene hydroperoxide, emulsified in a mixture of 1131.7 g water and 7.2 g potassiumstearate, were continuously added over three hours while the temperature was raised to 85°C. After the monomer dosing was finished, 1.8 g cumene hydroperoxide was added and the temperature was kept at 85°C for 30 minutes to complete the polymerization.

The resultant graft polymer dispersion, which had bimodal particle size distribution, had a mean particle size d₅₀ of from 150 to 350 nm and a d₉₀ of from 400 to 600 nm. The particle size distribution had a first maximum in the range from 50 to 150 nm and a second maximum in the range from 200 to 600 nm.

To the dispersion was added 0.2% by weight of a stabilizer, based, in each case, on the total solids content, and the mixture was cooled and coagulated at ca. 60°C in an aqueous 0,5% MgSO₄-solution followed by an aging step for 10 minutes at 100 °C. Afterwards the slurry was cooled down, centrifuged and washed with water to obtain a graft polymer (a2) with a moisture content of about 30%.

Characteristics of the used recipes are given in table 2.

**Table 2**

| Example | C1 | 1 | 2 | C2 | C3 | C4 |
|---|---|---|---|---|---|---|
| Graft base | K1 | K2 | K3 | K3 | K3 | K4 |
| Initiator | KPS | KPS | KPS | KPS | Redox | KPS |
| AN/St ratio | 20/80 | 20/80 | 20/80 | 20/80 | 20/80 | 20/80 |
| TDM weight % based on mon. a2) | none | none | none | 0,2 | 1,0 | none |

KPS: K₂S₂O₈, TDM: t-dodecyl mercaptane, AN: acrylonitrile, St: styrene

### 2. Preparation of Polymers (B), (C), (D)

Thermoplastic polymers (B) to (D) were prepared by continuous solution polymerization, as described in Kunststoff-Handbuch, ed. R. Vieweg and G. Daumiller, Vol, V "Polystyrol", Carl-Hanser-Verlag, Munich, 1969, p. 122-124. Table 3 gives the formulations and properties.

**TABLE 3**

| Components (B) to (D) | | | | |
|---|---|---|---|---|
| Component | B1 | B2 | C | D |
| Monomers [% by weight] | | | | |
| Styrene | 76 | 72 | 0 | 67 |
| α-Methylstyrene | 0 | 0 | 70 | 0 |
| Acrylonitrile | 24 | 28 | 30 | 33 |
| Viscosity number VN [ml/g] | 64 | 68 | 57 | 60 |

Component (E) is a commercial available N-phenylmaleimide containing polymer from Denka (Denka IP MS-N).

### 3. Preparation of the Blends

The graft rubber (A) containing residual water was metered into a Werner and Pfleiderer ZSK 30 extruder in which the front part of the two conveying screws were provided with retarding elements which build up pressure. A considerable part of the residual water was pressed out mechanically in this way and left the extruder in liquid form through water-removal orifices. The other components (B) to (F) were added to the extruder downstream behind the restricted flow zones, and intimately mixed with the dewatered component (A). The residual water still present was removed as steam via venting orifices in the rear part of the extruder. The extruder was operated at 250°C and 250 rpm, with a throughput of 10 kg/h. The molding composition was extruded and the molten polymer mixture was subjected to rapid cooling by being passed into a water bath at 25°C. The hardened molding composition was granulated.

The components used and their constituent amounts are given in Table 4.

### 4. Measurements Carried Out

### Swell Index and Gel Content [%]

A film was prepared from the aqueous dispersion of the graft base (a1) by evaporating the water. To 0.2 g of this film there were added 50 g of toluene. After a period of 24 hours the toluene was removed from the swollen sample by filtration with suction and the sample was weighed. After drying in vacuo at 110°C over a period of 16 hours, the sample was reweighed. The swelling index is the ratio of the specimen weight after the swelling procedure to the dry specimen weight after the second drying. The gel content is calculated correspondingly from the ratio of the dry weight after the swelling step to the weight of the specimen before the swelling step (x 100%).

### Particle Sizes of the Rubber Latex

The mean particle size d stated is the weight average of the particle size, as determined with an analytical ultracentrifuge following the method of W. Machtle, S. Harding (Eds.), AUC in Biochemistry and Polymer Science, Royal Society of Chemistry Cambridge, UK 1992 pp. 1447-1475. The ultracentrifuge readings give the integral mass distribution of the particle diameter in a sample. This makes it possible to determine what percentage by weight of the particles has a diameter equal to or smaller than a specific size.

The weight-average particle diameter d₅₀ indicates that particle diameter at which 50% by weight of all particles have a larger particle diameter and 50% by weight have a smaller particle diameter.

### Viscosity number (VN)

The VN is determined according to DIN 53726 on a 0.5% strength by weight solution of the polymer in dimethylformamide.

### Flowability (MVR [ml/10'])

Tests were carried out according to ISO 1133 B on the polymer melt at 220°C under a load of 10 kg

### Charpy Impact Strength (aₖ [kJ/m².])

Tests were carried out on specimens (80 x 10 x 4 mm, prepared according to ISO 294 in a family mold at a mass temperature of 250°C and a mold temperature of 60°C) at 23°C and - 40°C according to ISO 179-2/IeA (F).

### Elasticity (Modulus of Elasticity [MPa])

Tests were carried out according to ISO 527-2/1A/50 on specimens (prepared according to ISO 294 at a mass temperature of 250°C and a mold temperature of 60°C)

### Vicat [°C]

The Vicat softening point was determined on small pressed sheets according to ISO 306/B using a load of 50 N and a heating rate of 50 K/h.

### Gloss sensitivity.

Rectangular test specimens of 40 x 60 mm were prepared in a high gloss polished mold at a variable mass temperature of 230, 255 and 280°C, a mold temperature of 30°C and injection times of 0,1 and 0,5 seconds. For each condition 10 test specimen were prepared. Gloss was determined according to ISO 2813 on these rectangular with 45° angle of incidence, using Byk Microgloss measuring apparatus.

Typical data are the average gloss values (N=10) for the following conditions:
Mold temp. 230, 255 and 280°C
Injection time 0,1 and 0,5 seconds
Mold temp. 30°C

### Odor evaluation during processing (simulation).

Granulate from the resin compositions was stored for 1 month in paper sealed bags. 50g granulate from the resin composition was then placed in a sealed glass pot and heated to 180°C for 1 hour. Eight of the same series were prepared, so each test person had his own series of samples. After cooling down to 50°C, the glass pot was opened for smell. The existence of the unpleasant odor was tested by eight people who have a sensitive sense of smell. The unpleasant odor was graded on a scale from 1 (no smell) to 5 (very strong smell). The score from the majority of the people is listed in table 4. At equal votes for different scores the highest score is listed.

### The Unpleasant Odor Test after thermoplastic processing.

Granulate from the resin compositions was stored for 1 month in paper sealed bags. 50g granulate from the resin composition was then placed in a sealed glass pot for 24 hours. Eight of the same series were prepared, so each test person had his own series of samples.

After 24 hours the glass pot was opened for smell. The existence of the unpleasant odor was tested by eight people who have a sensitive sense of smell. The unpleasant odor was graded on a scale from 1 (no smell) to 5 (very strong smell). The score from the majority of the people is listed in table 4. At equal votes for different scores the highest score is listed.

### Residual mercaptane and mercaptopropionitrile.

### 1. Quantifying the sulphur containing components.

About 1 g of the sample is dissolved in 5 ml methylene-chloride and afterwards precipitated with 10 ml propanol-2. The serum is recovered by centrifuging (5 min at 5000 rpm) and selectively investigated on sulphur containing components on a GC system with a pulsed flame-photometer (PFPD).

The structure was investigated and explained by GC/MS.

### Residual cumylalcohol and acetophenon.

About 0.5 g of the sample is dissolved in 2 ml DMF and analyzed from the vapour phase by GC. For quantification, a calibration plot was prepared by preparing samples containing different amounts of the component to be analyzed and calculating according to the standard summation method.

### 5: Results of the Measurements

The results of the measurements are given in Table 4 and 5.

**TABLE 4**

| Blends and measurement results. The amounts of components are given in parts by weight | | | | | | | | |
|---|---|---|---|---|---|---|---|---|
| Example | C5 | 3 | 4 | 5 | C6 | C7 | C8 | C9 |
| Graft A | C1 | ex. 1 | ex. 2 | ex. 2 | C2 | C3 | C3 | C4 |
| Amount A (wgt% dry) | 30 | 28 | 29 | 28 | 34 | 29 | 29 | 29 |
| B | B1 | B1 | B1 | B2 | B1 | B1 | B2 | B1 |
| Amount B | 70 | 72 | 71 | 70 | 79 | 71 | 79 | 79 |
| F* | 0,3 | 0,3 | 0,3 | 0,3 | 0,3 | 0,3 | 0,3 | 0,3 |

| | | | | | | | | |
|---|---|---|---|---|---|---|---|---|
| F* mixture of 0,1% phenolic antioxidant (Wingstay L), 0,1% PS 800 and 0,1% silicon oil | | | | | | | | |

### Impurities

**ppm**

| TDM | <5 | 6 | 8 | 8 | 14 | 34 | 35 | 15 |
|---|---|---|---|---|---|---|---|---|
| Mercaptopropionitrile | <20 | <20 | <20 | <20 | 31 | 53 | 55 | 20 |
| Acetophenone | <40 | <40 | <40 | <40 | <40 | 40 | 50 | <40 |
| 2-phenyl propanol-2 | <40 | <40 | <40 | <40 | <40 | 80 | 80 | <40 |

### Mechanical properties

| | | | | | | | | |
|---|---|---|---|---|---|---|---|---|
| Flowability MVR [ml/10'] | 21,8 | 20,4 | 20,5 | 12,7 | 16,4 | 23,2 | 20,7 | 17,6 |
| Charpy Impact Strength aₖ [kJ/m²]) | 12,3 | 26,5 | 26,2 | 26,8 | 25,9 | 20,2 | 22,2 | 28,6 |
| Modulus of Elasticity [MPa] | 2150 | 2200 | 2250 | 2360 | 2260 | 2450 | 2430 | 2240 |

### Odor properties

| | | | | | | | | |
|---|---|---|---|---|---|---|---|---|
| During processing | 3 | 3 | 3 | 3 | 4 | 5 | 5 | 5 |
| After processing | 1 | 1 | 1 | 1 | 4 | 2 | 2 | 2 |

### Gloss sensitivity

Mould temp. 230°C

| | | | | | | | |
|---|---|---|---|---|---|---|---|
| Injection time 0,1 sec nm | 60 | 57 | 56 | 46 | 60 | 60 | 55 |
| Injection time 0,5 sec nm | 56 | 56 | 52 | 25 | 60 | 59 | 32 |
| Delta | 4 | 1 | 4 | 11 | 0 | 1 | 13 |

### Mould temp. 255°C

| | | | | | | | |
|---|---|---|---|---|---|---|---|
| Injection time 0,1 sec nm | 61 | 55 | 58 | 37 | 60 | 61 | 48 |
| Injection time 0,5 sec nm | 52 | 48 | 48 | 23 | 56 | 55 | 28 |
| Delta | 9 | 7 | 10 | 14 | 4 | 6 | 20 |

### Mould temp. 280°C

| | | | | | | | |
|---|---|---|---|---|---|---|---|
| Injection time 0,1 sec nm | 61 | 51 | 48 | 40 | 54 | 58 | 43 |
| Injection time 0,5 sec nm | 48 | 37 | 34 | 20 | 46 | 52 | 23 |
| Delta | 13 | 14 | 14 | 20 | 8 | 6 | 20 |

nm, not measured

From the data in table 4 it is clear that the compositions according to the invention have a superior combination of mechanical properties, gloss sensitivity and low odor.

**TABLE 5**

| Blends and measurement results. The amounts of components are given in parts by weight | | | | |
|---|---|---|---|---|
| Example | 6 | 7 | 8 | 9 |
| Graft A | ex. 1 | ex. 1 | ex. 1 | ex. 1 |
| Amount A (wgt% dry) | 33 | 33 | 33 | 37 |
| Amount B1 | 67 | 42 | 42 | 47 |
| Amount C | - | 25 | - | - |
| Amount D | - | - | 25 | - |
| Amount E | - | - | - | 16 |
| F* | 0,3 | 0,3 | 0,3 | 0,3 |

| | | | | |
|---|---|---|---|---|
| F* mixture of 0,1% Wingstay L, 0,1% PS 800 and 0,1% silicon oil | | | | |

### Mechanical properties

Flowability

| | | | | |
|---|---|---|---|---|
| MVR [ml/10'] | 17,5 | 18,2 | 7,9 | 1,5 |
| Charpy Impact Strength aₖ [kJ/m²]) | 25,3 3 | 16,9 9 | 17,6 | 11, 0 |
| Modulus of Elasticity [MPa] | 2260 | 2300 | 2300 | 2320 |
| Vicat B [°C] | 100,8 | 101,0 | 103,8 | 119,8 |

### Odor properties

| | | | | |
|---|---|---|---|---|
| After processing | 1 | 2 | 2 | 1 |

### Gloss

Mould temp. 230°C

| | | | | |
|---|---|---|---|---|
| Injection time 0,1 sec | 49 | 49 | 49 | 53 |

From the data in table 5 it is clear that also with the addition of different matrices the compositions according to the invention maintain their superior properties.

## Claims

1. A process for producing a graft copolymer A having a bimodal particle size distribution and comprising (based on the total weight of A):
40 to 90% by weight of a graft base (a1) and
10 to 60% by weight of a graft (a2), comprising the steps of
1. dispersion-polymerizing, based on the total weight of (a1)
a11) from 70 to 100% by weight of at least one conjugated diene,
a12) from 0 to 30% by weight of at least one other monoethylenically unsaturated monomer and
a13) from 0 to 10% by weight of at least one polyfunctional, cross linking monomer,
in the presence of
- a free radical initiator, which is not an azo compound or an organic per oxide or a hydroperoxide, and
- more than 0.5 and less than 1.2% by weight (based on (a1)) of a chain transfer agent containing a mercapto group,
2. graft copolymerizing in the presence of (a1)
(a21) from 65 to 95% by weight (based on a2) of one or more vinyl aromatic monomer,
a22) from 5 to 35% by weight of acrylonitrile,
a23) from 0 to 30% by weight of at least one other monoethylenically unsaturated monomer, and
a24) from 0 to 10% by weight of at least one polyfunctional, cross linking monomer,
in the presence of
a free radical initiator, which is not an azo compound or an organic peroxide or a hydroperoxide and in the absence of a chain transfer agent.

2. The process as claimed in claim 1, in which the free radical initiator in steps 1 and 2 is an inorganic peroxide.

3. The process as claimed in claim 2, where the inorganic free radical initiator is Na₂S₂O₈, K₂S₂O₈ or (NH₄)₂S₂O₈.

4. The process as claimed any of claims 1 to 3, where the chain transfer agent used in step 1 is an alkyl mercaptane or a thioglycolate.

5. The process as claimed in claim 4, where the chain transfer agent is n-dodecyl mercaptane or t-dodecyl mercaptane.

6. The process as claimed in one or more of claims 1 to 5, where the amount of chain transfer agent is more than 0.6 and less than 1.0% by weight (based on component (a1)).

7. The process as claimed in any of claims 1 to 6, where, in step 1, an initial charge comprises some styrene in polymerized form as polystyrene seed latex and another portion of the styrene is incorporated in the form of monomeric styrene by copolymerization.

8. The process as claimed in any of claims 1 to 7, where the bimodal particle size distribution of the graft copolymer (A) is achieved by partially agglomerating the polymer particles.

9. A graft copolymer (A) having a bimodal particle size distribution and comprising (based on the total weight of (A)):
40 to 90% by weight of a graft base (a1) and
10 to 60% by weight of a graft (a2),
obtainable by a process as claimed in any of claims 1 to 8.

10. A process for producing a thermoplastic molding composition (TMC), comprising the steps of
I. preparing a particulate graft copolymer A having a bimodal particle size distribution and comprising (based on the total weight of A):
40 to 90% by weight of a graft base (a1) and
10 to 60% by weight of a graft (a2),
by a process as claimed in any of claims 1 to 9
and
II. blending 5 to 80% by weight (based on the total TMC) of the graft copolymer A with
B) from 20 to 95% by weight (based on the total TMC) of a thermoplastic polymer (B) having a viscosity number VN of from 50 to 120 ml/g, made from, based on (B),
b1) 69 to 81 % by weight of at least one vinyl aromatic monomer,
b2) 19 to 31 % by weight of acrylonitrile, and
b3) 0 to 30% by weight of at least one other monoethylenically unsaturated monomer
and
optionally further thermoplastic polymers and/or additives.

11. The process as claimed in claim 10, wherein step II comprises the steps of
II.1 mixing the graft copolymer (A) with the polymer (B) and any other components, if they are present, in a mixing apparatus, giving an essential molten polymer mixture; and
II.2 rapidly cooling of the essentially molten polymer mixture over a period of from 0.1 to 10 sec.

12. A thermoplastic molding composition (TMC) comprising
A) from 50 to 80% by weight of a graft polymer (A) having bimodal particle size distribution made from, based on A,
a1) from 40 to 90% by weight of an elastomeric particulate graft base a1), obtained by polymerization of, based on a1),
a11) from 70 to 100% by weight of at least one conjugated diene,
a12) from 0 to 30% by weight of at least one other monoethylenically unsaturated monomer and
a13) from 0 to 10% by weight of at least one polyfunctional, cross linking monomer;
a2) from 10 to 60% by weight of a graft a2) made from, based on a2),
a21) from 65% to 95% by weight of at least one vinyl aromatic monomer,
a22) from 5 to 35% by weight of acrylonitrile,
a23) from 0 to 30% by weight of at least one monoethylenically unsaturated monomer, and
a24) from Ot o 10% by weight of at least one polyfunctional, cross linking monomer;
B) from 20 to 95% by weight of a thermoplastic polymer (B) having a viscosity number VN of from 50 to 120 ml/g, made from, based on (B),
b1) from 69 to 81 % by weight of at least one vinyl aromatic monomer,
b2) from 19 to 31 % by weight of acrylonitrile, and
b3) from 0 to 30% by weight of at least one other monoethylenically unsaturated monomer, optionally one or more further thermoplastic polymers and/or additives, obtainable by a process as claimed in claim 10 or 11.

13. The thermoplastic molding composition as claimed in claim 12, wherein the amount of residual chain transfer agent is below 20 ppm (based on dodecyl mercaptane).

14. The thermoplastic molding composition as claimed in claim 13, where the amount of residual chain transfer agent is < 20 ppm (based on dodecyl mercaptane), and the amount of residual mercaptonitrile (addition product of acrylonitrile and mercaptane) is below 50 ppm (based on dodecyl mercaptane).

15. The thermoplastic molding composition as claimed in any of claims 12 to 14, further comprising as components (C) to (F).
(C) from 0 to 50% by weight of a thermoplastic polymer (C) having a viscosity number VN of from 50 to 120 ml/g made from, based on (C),
c1) from 69 to 81 % by weight of at least one vinyl aromatic monomer,
c2) from 19 to 31 % by weight of acrylonitrile and
c3) from 0 to 30% by weight of at least one other monoethylenically unsaturated monomer,
where components (B) and (C) differ in their viscosity numbers VN by at least 5 units (ml/g), or in their acrylonitrile content by at least 5 units (% by weight) or in both characteristics, viscosity number VN and acrylonitrile content, by at least 5 units and
(D) from 0 to 70% by weight of a thermoplastic polymer (D) made from, based on (D),
d1) from 63 to less than 69% by weight of at least one vinyl aromatic monomer,
d2) from greater than 31 to 37% by weight of acrylonitrile and
d3) from 0 to 40% by weight of at least one other monoethylenically unsaturated monomer and
E) from 0 to 50% by weight of a thermoplastic polymer (E) made from, based on (E),
e1) from 4 to 96% by weight of at least one vinyl aromatic monomer,
e2) from 4 to 96% by weight of at least one monomer selected from the group consisting of methyl methacrylate, maleic anhydride and maleimides and
e3) from 0 to 50% by weight of acrylonitrile, where the polymer E) is different from the polymers B) and from C) and D) if they are present and
F) from 0 to 50% by weight of additives (F).

16. The thermoplastic molding composition as claimed in any of claims 12 to 15, in which the conjugated diene (a11) is butadiene.

17. The thermoplastic molding composition as claimed in any of claims 12 to 16, in which the vinyl aromatic monomer (a21) and (b1) and, if components (C), (D) and/or (E) are present, (c1), (d1) and (e1), is styrene or α-methyl styrene or a mixture of styrene and α-methyl styrene.

18. The thermoplastic molding composition as claimed in any of claims 12 to 17, in which the graft (a2) consists essentially of, based on (a2),
a21) from 75 to 85% by weight of styrene and/or α-methyl styrene
a22) from 15 to 25% by weight of acrylonitrile
and the thermoplastic polymer (B) consists essentially of, based on (B),
b1) from 71 to 78% by weight of styrene
b2) from 22 to 29% by weight of acrylonitrile.

19. A thermoplastic molding composition as claimed in any of claims 12 to 17, in which the monoethylenically unsaturated monomer (a12) is styrene or n-butyl acrylate or a mixture of these.

20. The thermoplastic molding composition as claimed in any of claims 12 to 18, in which the bimodal particle size distribution of the graft polymer A) has two maxima, at the weight average particle size from 25 to 200 nm on the one hand and from 150 to 800 nm on the other hand, and the weight ratio of the first population is from 5 to 60% and the weight ratio of the second population from 95 to 40%.

21. The thermoplastic molding composition as claimed in any of claims 12 to 20, in which the graft a2) comprises polyfunctional, cross linking monomers a24.

22. The thermoplastic molding composition as claimed in any of claims 12 to 21, in which (a13) and (a24) are each present in an amount from 0.01 to 5% by weight based on (a1) and (a2), respectively.

23. A molding produced from the thermoplastic molding composition as claimed in any of claims 12 to 22.

24. A process for producing a molding, comprising the steps of producing a thermoplastic molding composition according to a process as claimed in claims 10 or 11 and processing the obtained thermoplastic molding composition into the desired form.
